(19) Europäisches Patentamt
European Patent Office
Office européen des brevets

(11) EP 3 029 469 A1

(12) EUROPEAN PATENT APPLICATION

(43) Date of publication:
08.06.2016 Bulletin 2016/23

(51) Int Cl.:
*G01P 15/00* (2006.01) *G01V 1/18* (2006.01)

(21) Application number: 14196369.4

(22) Date of filing: 04.12.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ETH Zurich
8092 Zurich (CH)

(72) Inventors:
- Müller, Michelle
  5620 Bremgarten (CH)
- Maiwald, Verena
  8032 Zürich (CH)
- Cosmin, Roman
  8044 Zürich (CH)
- Hierold, Christofer
  5400 Baden (CH)

(74) Representative: Rutz, Andrea
Isler & Pedrazzini AG
Postfach 1772
8027 Zürich (CH)

# (54) Mechanical transducer for the detection of acoustic and/or seismic signals

(57) A mechanical transducer for the detection of acoustic and/or seismic signals is indicated, comprising a continuous or discrete coupled mass-spring network with varying masses and/or spring constants. The mass-spring network is adapted to transform a comparatively small-dimensioned motion parameter of a first mass element into a comparatively large-dimensioned motion parameter of a further mass element. Between the first mass element and the further mass element, the mass-spring network comprises one or more intermediate mass elements, which are coupled to the first mass element and the further mass element by means of spring elements.

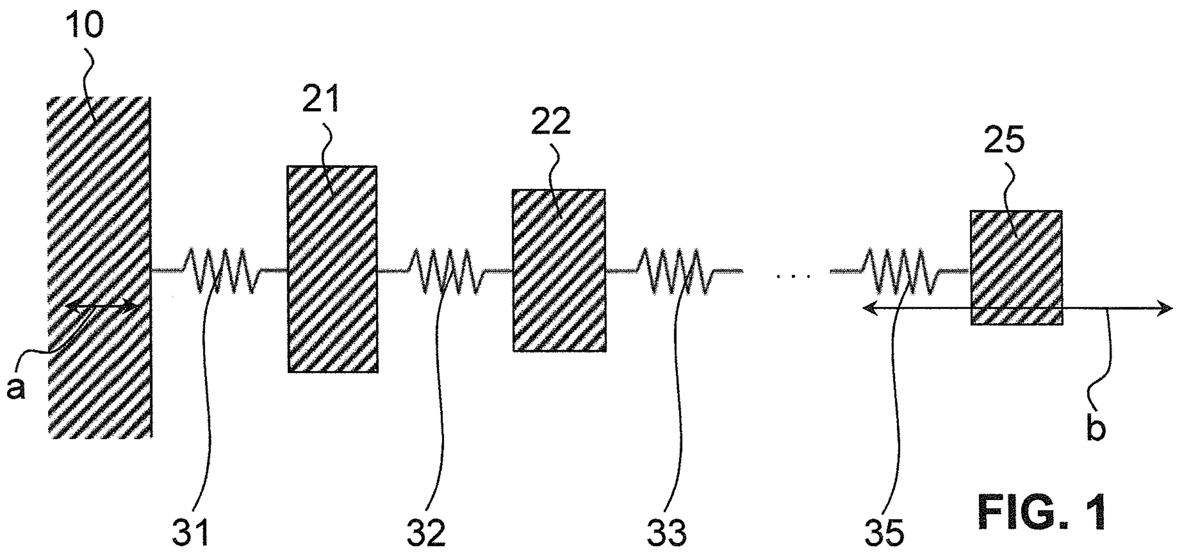


FIG. 1

EP 3 029 469 A1

## Description

### TECHNICAL FIELD

The present invention concerns a mechanical transducer for the detection of acoustic and/or seismic signals. The present invention also concerns an apparatus for measuring acoustic and/or seismic signals, comprising such a transducer, as well as a method for measuring acoustic and/or seismic signals by means of such an apparatus.

### PRIOR ART

Measuring weak acoustic/microseismic signals is useful in many different applications ranging from shock detection in logistics to monitoring of natural and artificial structures such as cliffs, rock glaciers, buildings, bridges etc. Micro-machined inertial sensors and piezoelectric or optical acoustic emission sensors are usually used for this purpose.

In many practical situations, the power consumption of the sensor itself is an important parameter, for example in autonomous sensor systems, powered by batteries or energy harvesters. Piezoelectric acoustic emission sensors dissipate considerable power for the electrical amplification and conditioning of the transducer output signal. Sensitive optical acoustic emission sensors are also power hungry because they require high intensity, often coherent, light sources. Micro accelerometers, though low power, are not sensitive enough to detect acoustic emission signals, especially in the frequency range beyond 1kHz.

In WO 2008/039378, a microelectromechanical structure is presented in which a first mass element is mechanically coupled to a second mass element, the first mass element having a considerably higher mass than the second mass element. Due to the mechanical coupling of the two mass elements, a small displacement of the first mass element leads to a large displacement of the second mass element. Thus, weak mechanic signals acting on the first mass element can be detected due to the amplified displacement of the second mass element.

US 7,559,238 discloses a device for detecting mechanical shock events by means of inertial elements and latching mechanisms.

The signal detectability by means of these prior art devices, however, is limited. The signal amplification is only effective with these devices for a certain type of external excitation, i.e. for an excitation at resonance frequency. The detection, of short, burst-like acoustic/microseismic signals, which thus have a broadband spectrum, is hardly possible with these devices.

### SUMMARY OF THE INVENTION

It is an object of the present invention to provide a highly sensitive mechanical transducer for detecting weak acoustic and/or seismic signals in an arbitrarily selectable frequency range and with minimal energy consumption.

This object is solved by a mechanical transducer as claimed in claim 1. An apparatus comprising such a transducer is claimed in claim 14, and a method for measuring acoustic and/or seismic signals by means of such an apparatus is indicated in claim 15. Further embodiments of the mechanical transducer and the method are provided in the dependent claims.

The present invention provides a mechanical transducer for the detection of acoustic and/or seismic signals, comprising a continuous or discrete coupled mass-spring network with varying masses and/or spring constants, the mass-spring network being adapted to transform a comparatively small-dimensioned motion-parameter, particularly displacement or velocity or acceleration, of a first mass element into a comparatively large-dimensioned motion-parameter, particularly displacement or velocity or acceleration, of a further mass element. The mass-spring network comprises one or more intermediate mass elements being arranged between the first mass element and the further mass element and being coupled to the first mass element and the further mass element by means of respective spring elements.

Thus, the transducer comprises a purely mechanical structure that amplifies acoustic/microseismic signals into a large-dimensioned motion parameter, particularly displacement or velocity or acceleration, of a localized mechanical structure. The energy dissipated in the amplification process is minimal, being limited by damping of the motion of each mass only, and comes from the input signal domain itself. Purely mechanical amplification relaxes the need for electronic amplification and thus greatly reduces the electrical energy consumption associated with the acoustic/seismic signal detection. Minimal electrical energy will usually only be required to transduce the amplified motion of the further, last mass element into an electrical signal.

The intermediate mass elements are usually coupled in series to each other and to the first and the further mass element. Due to the presence of the intermediate mass elements, the input signal can be transformed into a gradually increasing motion of the mass elements as concerns e.g. their displacement, velocity or acceleration , such that basically an arbitrarily high amplification factor and thus sensitivity of the mechanical transducer can be achieved.

The mass-spring network is preferably adapted to transform a comparatively small displacement, velocity or acceleration of the first mass element into a comparatively large displacement, velocity or acceleration of the further mass element. More preferably, the mass-spring network is adapted to transform a comparatively small displacement, particularly translation displacement, of the first mass element into a comparatively large displacement, particularly translation displacement, of the further mass element. The terms "displacement", "velocity" and "acceleration" refer to both translational and angular displacements, velocities and accelerations, respectively. Thus, it is also possible that the mass elements and the spring elements are coupled to each other such as to transform a comparatively small torsion into a comparatively large torsion.

The spectral transfer function for the signal amplification is directly dependent on the number of the mass elements and on the chosen masses and spring constants of the mass-spring network. As a consequence, the transducer can be designed such, that a signal amplification within an arbitrarily selectable frequency range is achieved. In addition, by using electrostatic spring softening and/or electrostatic damping, the bandwidth becomes adaptable further and the spectral transfer function can be freely shaped within the bandwidth. In other words, the mechanical transducer can easily be tailored to the expected input signals and thus to the specific measurement requirements by carefully designing the spatial distribution of the masses and the spring constants.

Since the transducer can be designed to have a broadband spectral transfer function, it is also possible to measure and detect short, burst-like signals. As a consequence, the transducer can for example be used to detect shocks during transportation in logistics, to monitor structural degradation in bridges or buildings, to detect potential natural disasters associated with unstable rock glaciers or cliffs as indicated by cracking sounds in rocks. The use of the transducer to amplify sound in air or even in fluids is also possible, e.g. for microphone, noise detection or sonar-type applications.

Usually, the mass element with the largest mass is preferably directly coupled to the acoustic or microseismic source on one side and to mass elements with smaller masses on the other side(s) with spring elements. The mass elements with smaller masses are preferably coupled via softer springs to other yet smaller masses, and the network/chain continues until a smallest mass is reached that is not coupled to any other subsequent smaller masses. Thus, the mass and stiffness reduces gradually from the largest mass which is coupled to the acoustic source/input to the smallest mass in this case. As a consequence, the last, smallest mass will have a much higher motional amplitude than the first, largest one. The amplification mechanism can particularly be understood by analogy to the tsunami or wave shoaling effect, with deep water being the large mass, shallow water the small mass, and the wave being the acoustic/microseismic signal travelling from the large to the small mass.

Advantageously, the mass-spring network is designed such, that a change in motion of the first mass element is transformed into a change in motion of the intermediate mass elements and into a change in motion of the further mass element in such a way, that the magnitude of a specific motion parameter is gradually increased from mass element to mass element. This can particularly be achieved, if the masses of the first mass element, the intermediate mass elements and the further mass elements gradually decrease from mass element to mass element in the direction from the first mass element to the further mass element. Alternatively or in addition, the spring constants of the spring elements can gradually decrease in the direction from the first mass element to the further mass element.

In a preferred embodiment, the ratios of the masses m to the spring constants k are essentially constant over all pairs of mass element and spring element being directly connected to each other. With an essentially constant ratio of m/k over the entire mass-spring network/chain, the resonance frequency of each pair of mass and spring is essentially the same, such that a high overall amplification factor can be achieved.

The mass-spring network comprises preferably at least three, more preferably at least seven, and most preferably at least fifteen intermediate mass elements. It has been found that a high signal amplification over a comparatively broad frequency range can be achieved with these numbers of intermediate mass elements. The amplification increases convexly with the number of mass elements, thus for a higher amplification the more masses the better. The number of mass and spring elements is limited in practice by requirements for robustness and constraints from the fabrication process flow only.

In one embodiment, the mass-spring network comprises discretely arranged masses and springs and is designed such with respect to the masses and the spring constants, that a spectral transfer function is achieved that has the same number of essentially regularly distributed spectral peaks as the number of discrete masses.

The mass-spring network can also be designed as a continuous mass-spring network in the form of a membrane with varying thickness and/or tension. A continuous mass-spring network usually leads to a particularly smooth spectral transfer function. The mass-spring network is preferably made from one piece.

In a preferred embodiment, the first mass element, the further mass element and the intermediate mass elements are essentially all arranged in a common plane and are adapted to be displaced out of the plane upon external excitation. Such an embodiment allows the transducer to have a particularly flat and space-saving design.

The first mass element, the further mass element and the intermediate mass elements are preferably concentrically arranged, with the further mass element being advantageously arranged in the center. The smaller and more sensitive mass elements are then usually surrounded and protected by the larger and less sensitive mass elements, which has advantages particularly during the transportation of the transducer.

The mass-spring network can have the form of a one-dimensional, a two-dimensional or a three-dimensional structure. With a mass-spring network having a two-dimensional or a three-dimensional structure, signal detection from more than one spatial direction and/or rotational axis becomes possible.

A particularly simple and cost-effective production of the transducer is achieved, if the transducer is produced from a silicon-on-insulator (SOI) wafer. In doing so, the bulk layer of the SOI-wafer preferably forms the mass elements and the device layer forms the spring elements. Photolithography is preferably used to form the respective structure of the wafer.

The invention also provides an apparatus for measuring acoustic and/or seismic signals, comprising a transducer as indicated and a measurement device for measuring at least one motion parameter, particularly the displacement, of the further mass element and/or of any intermediate mass elements. By measuring not only a motion parameter of the further mass element, but also of the intermediate mass element(s), a multi-threshold detector can be realized. In this context, different mass elements can for example be attributed to different resonance frequencies.

The measuring by means of measurement device can for example be based on capacitive or piezoresistive measurement, on optical effects, such as interfering laser beams, or on the piezoelectric or electromagnetic effect.

Furthermore, a method is indicated for measuring acoustic and/or seismic signals by means of the apparatus as mentioned. With this method, the first mass element of the transducer is exposed, particularly coupled, to the signal to be measured and motion data of the further mass element and/or of any intermediate mass elements of the transducer are measured by means of the measurement device.

The mechanical amplification of weak acoustic/microseismic events within a predefined bandwidth enables frequency-dependent sensing and spectral analysis of incoming signals. Thus, the spectrum of the measured motion data can be analyzed, in order to determine the type of acoustic and/or seismic signal.

SHORT DESCRIPTION OF THE FIGURES

Preferred embodiments of the invention are described in the following with reference to the drawings, which only serve for illustration purposes, but have no limiting effects. In the drawings it is shown:

- Fig. 1 a schematic cross-sectional view of a first embodiment of an inventive mechanical transducer, illustrating the basic principle of the invention;
- Fig. 2 a cross-sectional view of a second embodiment of an inventive mechanical transducer;
- Fig. 3 a perspective view of a third embodiment of an inventive mechanical transducer;
- Fig. 4 a plane view from above on the mechanical transducer shown in Fig. 3;
- Fig. 5 a plane view from above on a fourth embodiment of an inventive mechanical transducer;
- Fig. 6a a first step of the process for producing a fifth embodiment of an inventive mechanical transducer, in cross-sectional view and with a legend;
- Fig. 6b a second step of the process for producing a fifth embodiment of an inventive mechanical transducer, in cross-sectional view;
- Fig. 6c a third step of the process for producing a fifth embodiment of an inventive mechanical transducer, in cross-sectional view;
- Fig. 6d a fourth step of the process for producing a fifth embodiment of an inventive mechanical transducer, in cross-sectional view;
- Fig. 6e a fifth step of the process for producing a fifth embodiment of an inventive mechanical transducer, in cross-sectional view;
- Fig. 6f a sixth step of the process for producing a fifth embodiment of an inventive mechanical transducer, in cross-sectional view;
- Fig. 7 a diagram illustrating the transient displacement response of an inventive mechanical transducer having eight mass elements upon harmonic excitation near its first Eigenfrequency mode;
- Fig. 8 a diagram illustrating the displacement amplification (displacement mass n / displacement mass 1) vs. number of coupled masses n;
- Fig. 9 a diagram illustrating the spectral amplification achieved with 16 coupled masses, for two distinct damping coefficients; and
- Fig. 10 a diagram illustrating the spectral amplification achieved with the same total mass, but with a different number of coupled masses.

DESCRIPTION OF PREFERRED EMBODIMENTS

Various different embodiments of mechanical transducers are shown in figures 1 to 6f. Identical or similar elements of the various embodiments or elements having the same or a similar function are marked with the same reference numerals throughout all figures 1 to 6f.

Figure 1 schematically shows a first inventive embodiment of a mechanical transducer for the detection of weak acoustic and/or seismic signals. The mechanical transducer which here comprises a discrete coupled mass-spring network illustrates particularly well the basic principle of the invention.

The mass-spring network of the transducer shown in figure 1 comprises a total of n discrete mass elements 21 to 25 which are coupled to each other and to a support structure 10 in a chain-like manner, i.e. in series, by means of n spring elements 31 to 35. Spring elements 31 to 35 can be spiral springs or any other type of springs such as beams. The first mass element 21 has a mass $m_1$ and is coupled to the support structure 10 by means of the first spring element 31 having spring constant $k_1$. Via the second spring element 32 with spring constant $k_2$, the first mass element 21 is coupled to the second mass element 22 which has a mass $m_2$. An arbitrary number of further mass elements being interconnected by respective spring elements can be coupled in a chain-like manner to the second mass element 22 via the third spring element 33. An $n^{th}$ mass element 25 is coupled to the end of the chain by means of the $n^{th}$ spring element 35 having spring constant $k_n$.

In the embodiment as shown in figure 1, the respective masses of mass elements 21 to 25 are consecutively decreased from the first mass element 21 to the $n^{th}$ mass element 25. Thus, the following relationship holds with respect to the masses $m_1$ to $m_n$ of mass elements 21 to 25:

$$m_1 > m_2 > \ldots > m_n.$$

In order to achieve an efficient motional amplification, in this case displacement amplification, from the first mass element 21 to the $n^{th}$ mass element 25, the spring constants of spring elements 31 to 35 are likewise consecutively decreased from the first mass element 21 to the $n^{th}$ mass element 25. The relationship between the spring constants $k_1$ to $k_n$ of spring elements 31 to 35 is as follows:

$$k_1 > k_2 > k_3 > \ldots > k_n.$$

A large motional amplification, particularly displacement amplification, from the first mass element 21 to the $n_{th}$ mass element 25 is particularly achieved, if the ratio of mass to spring constant remains essentially constant for each pair of mass element and spring element:

$$\frac{m_1}{k_1} = \frac{m_2}{k_2} = \frac{m_3}{k_3} = \ldots = \frac{m_n}{k_n}$$

The support structure 10 which is only shown in part in figure 1 can for example form a housing or a frame of the mechanical transducer. The support structure 10 is preferably directly coupled to the acoustic and/or seismic signal source, such that in the event of an external excitation of the mechanical transducer by means of the acoustic and/or seismic signal source the support structure 10 is moved along displacement direction a. The motion of the support structure 10 is usually of such little extent, that it cannot easily be detected with the usual equipment for measuring small motional amplitudes. The motion of the support structure 10, however, is transferred into a respective displacement of the first mass element 21 due to the coupling with the first spring element 31 and further, via the second spring element 32 to the second mass element 22 until the $n^{th}$ mass element 25. Since the mass and spring constant is gradually decreased in this process, the kinetic energy of the support structure 10 is transformed from a comparatively small displacement of the support structure 10 and of the first mass element 21 into a comparatively large displacement of the $n^{th}$ mass element 25 in direction b.

A measurement device not shown in figure 1 is used to measure displacements of the $n^{th}$ mass element 25. The measurement device can for example be a capacitive displacement sensor in which the $n^{th}$ mass element 25 forms one of the electrodes. An optical measurement device or a laser interferometer can also be used for this purpose. Further possibilities include e.g. the use of a measurement device that utilizes the piezoresistive or piezoelectric effect. Due to the purely mechanical amplification of the motion of the support structure 10 into a comparatively large displacement of the $n^{th}$ mass element, it is possible to even detect motion in the pm-range for displacement, in the um/s-range for velocity and in the mg-range for acceleration by the apparatus comprising the mechanical transducer and the measurement device. Apart from the usual energy needed by the measurement device, no further energy needs to be provided to the apparatus and particularly to the mechanical transducer.

Figure 2 shows a second embodiment of a mechanical transducer which is based on the same principle as the transducer shown in figure 1. The transducer according to figure 2 has a total of four mass elements 21 to 24 which are connected by respective spring elements 31 to 34 (thus, n = 4). Each of the spring elements 31 to 34 here has the form of a leaf or a beam spring. The main oscillation direction of the mass elements 21 to 24 is perpendicular to the longitudinal direction of the springs, i.e. along the top-down direction in figure 2. The embodiment as show in figure 2 has the advantage that the coupled mass-spring network can be made in one piece.

Figures 3 and 4 show a third embodiment in which the mass elements 21 to 25 are concentrically arranged, with the smallest, $8^{th}$ mass element 25 being arranged in the center (thus, n = 8). The support structure 10 is here designed as a square frame that forms the periphery of the mechanical transducer. In the plane view from above as shown in figure 4, the $n^{th}$ or in this case $8^{th}$ mass element 25 has the form of a filled square. The first to the $7^{th}$ mass elements are concentrically arranged between the support structure 10 and the $8^{th}$ mass element 25. The radial outer surface of the first mass element 21 is connected to the radial inner surface of the support structure 10 by means of four first spring elements 31 regularly distributed along the periphery of the first mass element 21. The first mass element 21 is connected to the second mass element 22 by means of four second spring elements 32 being attached to the radial inner surface of the first mass element 21 and the radial outer surface of the second mass element 22. The second mass element 22 is coupled to the third mass element in the same manner by means of four third spring elements. The $4^{th}$, $5^{th}$, $6^{th}$, $7^{th}$ and $8^{th}$ mass elements are coupled to each other in an analogous way by means of respective spring elements.

Thus, the support structure 10, the first mass element 21, the $n^{th}$ mass element 25 as well as the intermediate mass elements provided between the first and the $n^{th}$ mass element are all arranged in a common plane. Upon external excitation of the support structure 10, the mass elements 21 to 25 are displaced in an essentially perpendicular direction out of this common plane.

The spring elements 31 to 35 of the embodiment shown in figures 3 and 4 can for example be designed as leaf springs or as elastic bands, such as rubber bands.

The embodiment of figures 3 and 4 has the advantage that the mechanical transducer as a whole has a very flat and therefore space-saving design. Furthermore, the mass elements 21 to 25 are effectively protected by the support structure 10 with regard to external mechanical influences e.g. during transportation of the transducer. Due to geometric reasons with the given concentric arrangement, the masses of mass elements 21 to 25 gradually decrease from the radially outermost first mass element 21 to the centrally arranged $n^{th}$ mass element 25, if each of mass elements 21 to 25 is made from the same material and has the same thickness.

The embodiment shown in figure 5 differs from the embodiment of figures 3 and 4 by the circular shape of the mass elements 21 to 25. The first mass element 21 as well as the intermediate mass elements each has the form of a ring being concentrically arranged around the $n^{th}$ mass element 25 having the form of a filled circular plate. A large number of first, second, third, etc. and $n^{th}$ spring elements are provided to couple each pair of neighboring mass elements. The spring elements are distributed in regular distances along the periphery of each mass element. If the spring elements are identical, their number has to increase gradually from the $n^{th}$ mass element 25 towards the support structure 10, if a change of the effective spring constants between the mass elements is required.

Figures 6a to 6f show a particular method for producing a mechanical transducer according to a fifth embodiment (figure 6f). The bulk layer is used to form the mass elements and the device layer to form the spring elements. Photolithography is used to transfer the respective patterns onto the wafer.

According to figure 6a, it is the first step of the method to provide a layered silicon-on-insulator (SOI) wafer with a silicon dioxide ($SiO_2$)-layer 42 being sandwiched between two silicon (Si)-layers that form a bulk layer 41 and a device layer 43, respectively. A photoresist 44 is then applied to the device layer 43 of the wafer such that gaps are provided in the photoresist 44 at the intended positions of the spring elements. By means of deep reactive ion etching (DRIE) or wet etching techniques, the part of the Si-layer in the regions of the gaps is removed down to the $SiO_2$-layer 42. Thus, a patterned device layer 43 is obtained (figure 6b).

In the next step, the device layer 43 is spin-coated by a protective layer of photoresist 44 (figure 6c). Subsequently, a photoresist is applied to the bulk layer 41 at the intended positions of the mass elements (figure 6d). With DRIE or wet etching techniques, the parts of the bulk layer 41 which are not covered by the photoresist 44 are removed down to the $SiO_2$-layer 42, results in a patterning of the bulk layer 41 (figure 6d). The etching is carried out, while the wafer is placed and attached by means of an adhesive 45 on a Si-carrier 46.

As shown in figure 6f, the spring elements 31 to 34 are released from the $SiO_2$-layer 42 with wet etching using hydrofluoric acid or with dry etching using vapor hydrogen fluoride (HF) or in a reactive ion etching step (RIE).

Thus, by means of the proposed method the mechanical transducer can be produced from a single SOI-wafer. As shown in figure 6f, the bulk layer 41 forms the support structure 10 as well as the first, second, third and fourth mass element 21, 22, 23 and 24 of the transducer. The first, second, third and fourth spring elements 31, 32, 33 and 34, each in the form of a leaf spring, are formed by the device layer 43. The mechanical transducer as shown in figure 6f has a rotationally symmetric design, similar as the one shown in figure 5.

Figure 7 illustrates the shoaling-like transient response of a mechanical transducer comprising eight mass elements under harmonic external excitation near the first Eigenfrequency mode of the transducer. It is clearly discernible, how the kinetic energy is transformed from the first mass element via the intermediate mass elements to the eighth mass element. During this process, the displacement gradually increases with each mass element, such that a comparatively large displacement of the eighth mass element is obtained.

Figure 8 shows a diagram illustrating the relationship of signal amplification (displacement mass n / displacement mass 1) vs. the number of coupled masses n. Obviously, large amplifications can be achieved with a high number of masses in the mass-spring network. The dashed continuous curve represents a simple mathematical scaling law obtained by assuming equipartition of kinetic energy of the different masses in steady-state.

In figure 9, the spectral amplification achieved with 16 coupled masses is shown, for two distinct damping coefficients c. It can be seen, that an amplification over a broad frequency range is achieved. Figure 10 shows that the frequency range of the amplification is directly dependent on the number n of mass elements. With eight mass elements, the spectral transfer function allows for a displacement amplification in a considerably broader range of frequencies as compared to the situation with four mass elements. It can also be seen from figures 9 and 10, that a spectral transfer function is achieved that has the same number of essentially regularly distributed spectral peaks as the number n of discrete masses. Thus, by carefully choosing the masses $m_1$, $m_2$, ... , $m_n$ of the mass elements 31 to 35 and the spring constants $k_1$, $k_2$, ..., $k_n$ of the spring elements 21 to 25, the spectral transfer function of displacement amplification can arbitrarily be designed with regard to the expected signals to be detected and with regard to the measurement requirements.

The location of the peaks in the spectrum and thus the frequencies with maximal amplification are directly dependent on the ratios of the masses to the respective spring constants of the mass-spring network. In other words, the masses and spring constants of the transducer can be chosen such that the maximal amplification occurs at certain frequencies or over a certain frequency range. An amplification over a broad range of frequencies can particularly be obtained by means of the mechanical transducers shown in figures 1 to 6d by varying the ratio of mass to spring constant from mass element to mass element.

The coupled mass-spring networks according to the embodiments shown in figures 1 to 6f do not necessarily be discrete, but could alternatively also be continuous. In a continuous mass-spring network, the transitions between the mass elements and the spring elements are not sudden, but smooth. In combination with electrostatic spring softening and/or electrostatic damping, the bandwidth and shape of the spectral transfer function is further adaptable. Thus, the spectral transfer function can be freely shaped within the bandwidth, e.g. also to not have less and/or less distinct peaks as the transfer functions shown in figures 9 and 10. The continuous mass-spring network could particularly be designed as a membrane with varying thickness and/or tension in the radial direction. The mass elements of such a continuous mass-spring network would in this case at least partly also act as springs and the spring elements as masses. While a purely discrete mass-spring network is shown in figure 1, a certain smoothness in the transitions between the mass elements and the spring elements is present in the embodiment according to figure 2. An embodiment comprising a continuous membrane instead of discrete masses and springs can be obtained by replacing the mass elements 21 to 25 and the spring elements 31 to 35 of the embodiments shown in figures 3 to 5 by a respective membrane.

The invention is of course not limited to the preceding presented embodiments and a plurality of modifications is possible. For example, the coupled mass-spring network does not necessarily need to have a one-dimensional structure as in the embodiments of figures 1 and 2 or a two-dimensional structure as in the embodiments of figures 3 to 5, but could also have a three-dimensional structure, in order to measure input signals independently of their directions. Furthermore, the mass elements 21 to 25 of the embodiments shown in figures 1 to 6f do not necessarily need to vary in mass, but could also have constant masses. Instead of varying the masses, the spring constants of the spring elements 31 to 35 could be varied in these embodiments. It would also be possible to design the mass-spring network such, that not the displacement of the mass elements is amplified, but their velocity or acceleration. The spring elements 31 to 35 shown in figure 1 could of course also be designed as torsional springs, in order to amplify a torsional motion. A plurality of further modifications is possible.

REFERENCE NUMERALS

| | | | |
|---|---|---|---|
| 10 | Support structure | 34 | Fourth spring element |
| | | 35 | $N^{th}$ spring element |
| 21 | First mass element | | |
| 22 | Second mass element | 41 | Bulk layer |
| 23 | Third mass element | 42 | $SiO_2$-layer |
| 24 | Fourth mass element | 43 | Device layer |
| 25 | $N^{th}$ mass element | 44 | Photoresist |
| | | 45 | Adhesive |

(continued)

| | | | |
|---|---|---|---|
| 31 | First spring element | 46 | Carrier |
| 32 | Second spring element | | |
| 33 | Third spring element | a, b | Displacement directions |

## Claims

1. A mechanical transducer for the detection of acoustic and/or seismic signals, comprising a continuous or discrete coupled mass-spring network with varying masses and/or spring constants, the mass-spring network being adapted to transform a comparatively small-dimensioned motion parameter of a first mass element into a comparatively large-dimensioned motion parameter of a further mass element,
**characterized in that**
the mass-spring network comprises one or more intermediate mass elements being arranged between the first mass element and the further mass element and being coupled to the first mass element and the further mass element by means of spring elements.

2. The transducer as claimed in claim 1, wherein the mass-spring network is designed such, that a change in motion of the first mass element is transformed into a change in motion of the intermediate mass elements and into a change in motion of the further mass element in such a way, that the magnitude of a specific motion parameter is gradually increased from mass element to mass element.

3. The transducer as claimed in one of claims 1 or 2, wherein the masses of the first mass element, the intermediate mass elements and the further mass elements gradually decrease from mass element to mass element in the direction from the first mass element to the further mass element.

4. The transducer as claimed in one of the preceding claims, wherein the spring constants of the spring elements gradually decrease in the direction from the first mass element to the further mass element.

5. The transducer as claimed in one of the preceding claims, wherein the ratios of the masses to the spring constants are essentially constant over all pairs of mass element and spring element being directly connected to each other.

6. The transducer as claimed in one of the preceding claims, wherein the mass-spring network comprises at least three, in particular at least seven, intermediate mass elements.

7. The transducer as claimed in one of the preceding claims, wherein the mass-spring network comprises discretely arranged masses and springs and is designed such with respect to the masses and the spring constants, that a spectral transfer function is achieved that has the same number of essentially regularly distributed spectral peaks as the number of discrete masses.

8. The transducer as claimed in one of the preceding claims, wherein the mass-spring network is a continuous mass-spring network in the form of a membrane with varying thickness and/or tension.

9. The transducer as claimed in one of the preceding claims, wherein the first mass element, the further mass element and the intermediate mass elements are essentially all arranged in a common plane and are adapted to be displaced out of the plane upon external excitation.

10. The transducer as claimed in one of the preceding claims, wherein the first mass element, the further mass element and the intermediate mass elements are concentrically arranged.

11. The transducer as claimed in one of the preceding claims, wherein the mass-spring network has the form of a two-dimensional or three-dimensional structure.

12. The transducer as claimed in one of the preceding claims being produced from a silicon-on-insulator (SOI) wafer.

13. The transducer as claimed in claim 12, wherein the SOI-wafer has a bulk layer that forms the mass elements and a device layer that forms the spring elements.

**14.** An apparatus for measuring acoustic and/or seismic signals, comprising a transducer as claimed in one of the preceding claims and a measurement device for measuring at least one motion parameter of the further mass element and/or of any intermediate mass elements.

**15.** A method for measuring acoustic and/or seismic signals by means of the apparatus as claimed in claim 14, wherein the first mass element of the transducer is exposed to the signal to be measured, and wherein motion data of the further mass element and/or of any intermediate mass elements of the transducer are measured by means of the measurement device.

**16.** The method as claimed in claim 15, wherein the spectrum of the measured motion data is analyzed, and wherein the type of acoustic and/or seismic signal is determined based on this analysis.

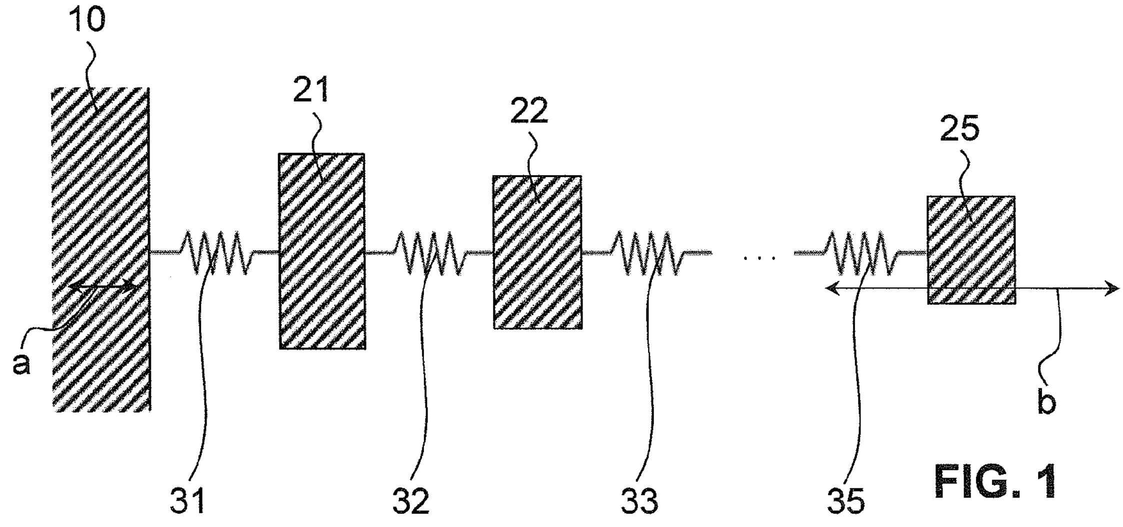


FIG. 1

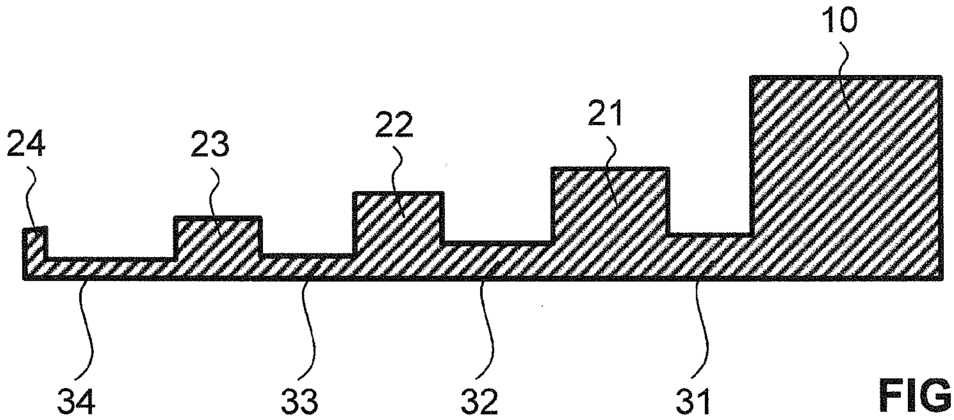


FIG. 2

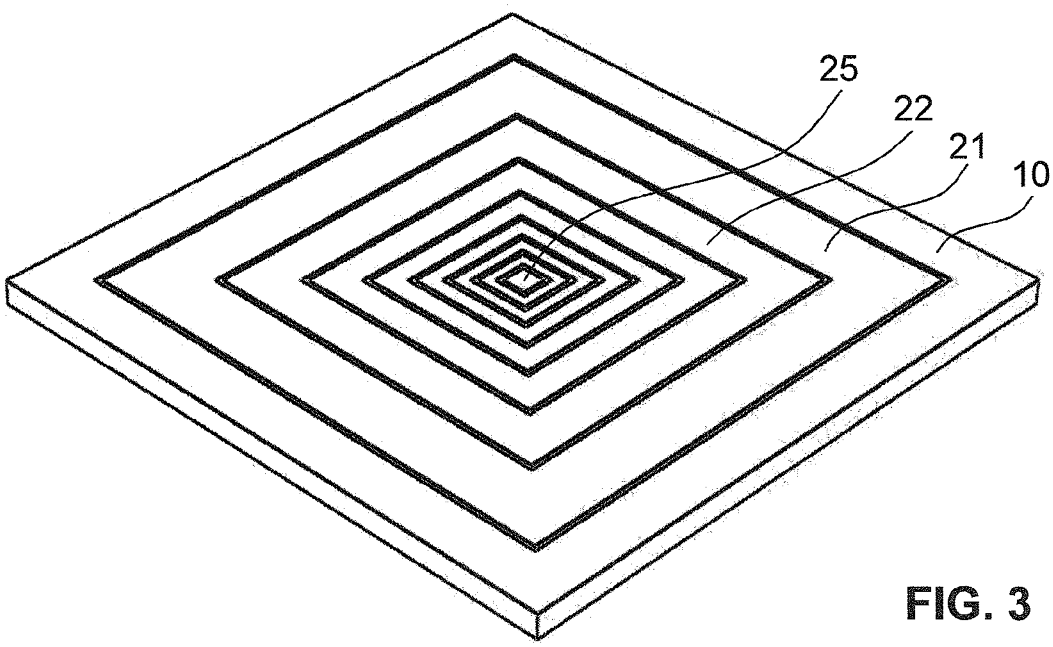


FIG. 3

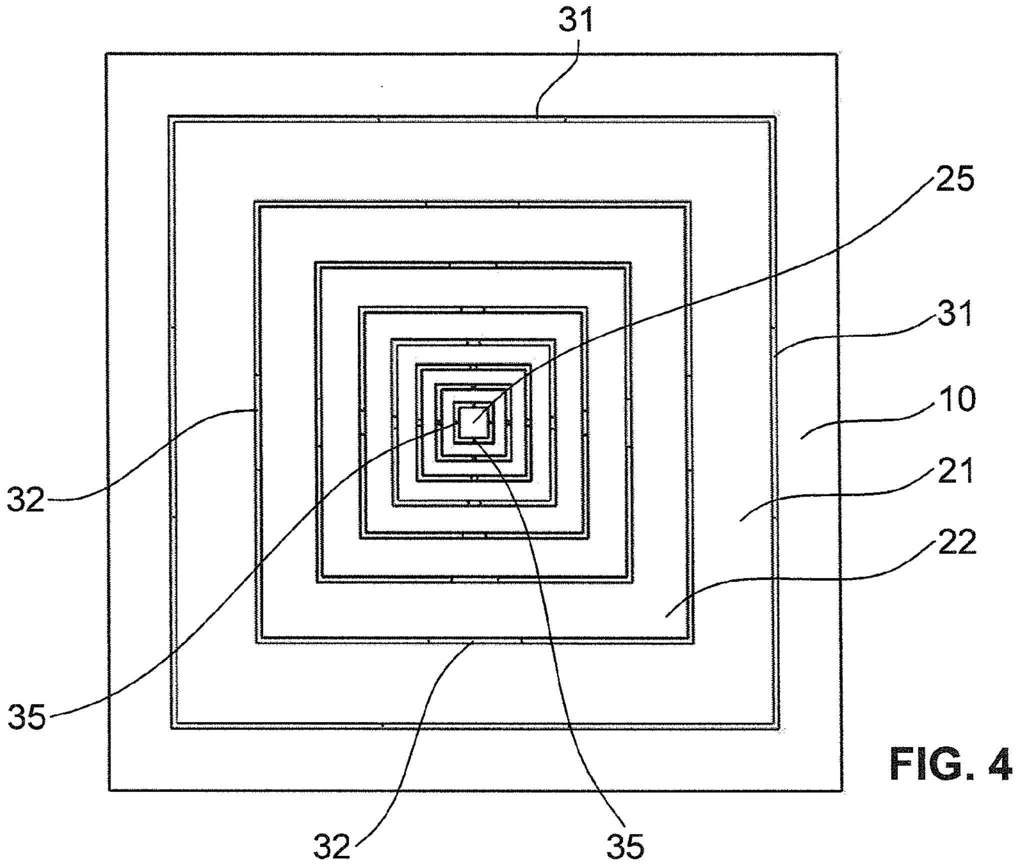


FIG. 4

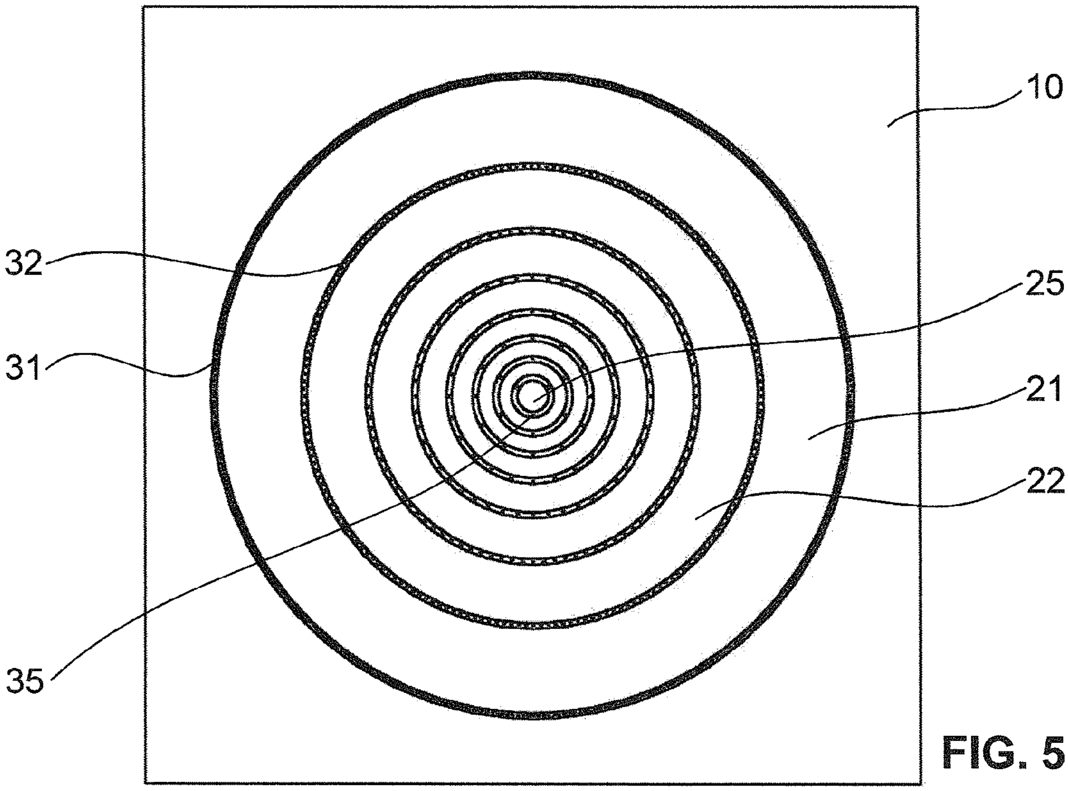


FIG. 5

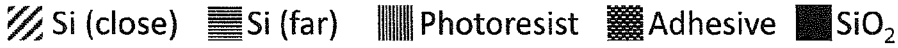


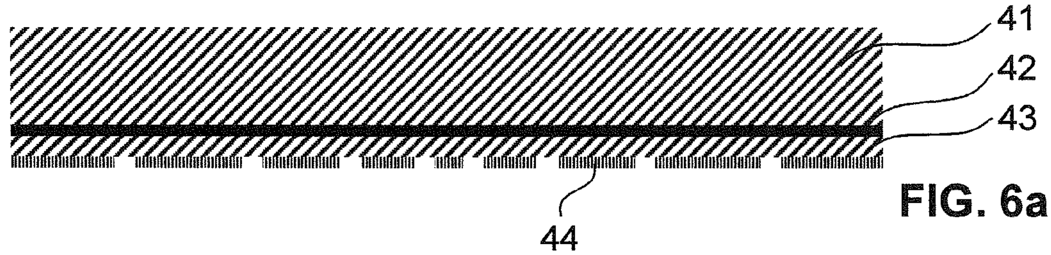


FIG. 6a

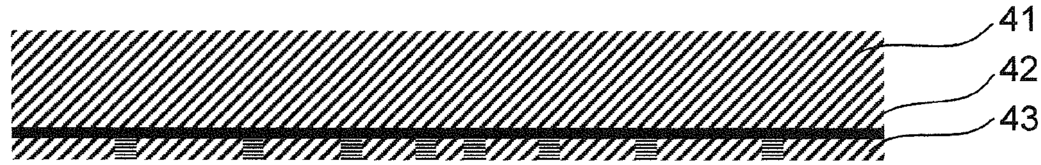


FIG. 6b

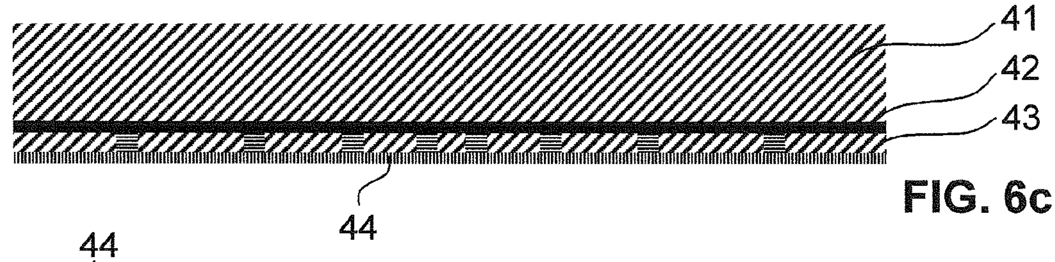


FIG. 6c

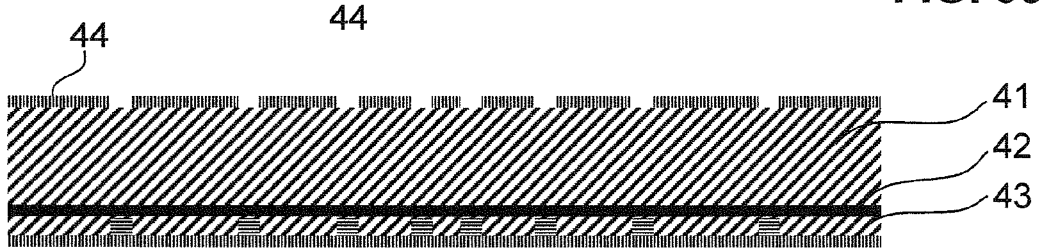


FIG. 6d

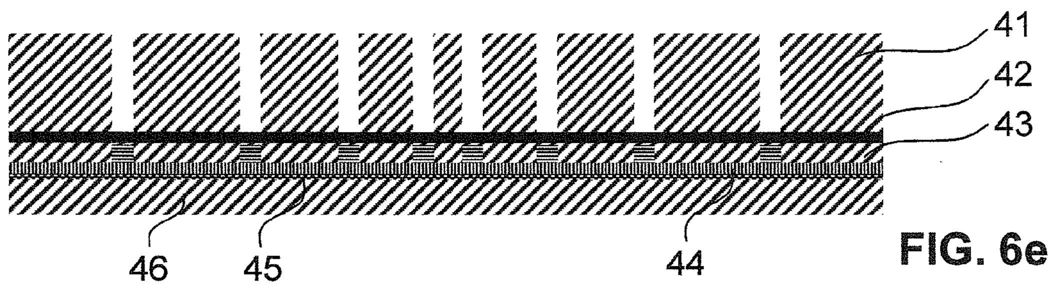


FIG. 6e

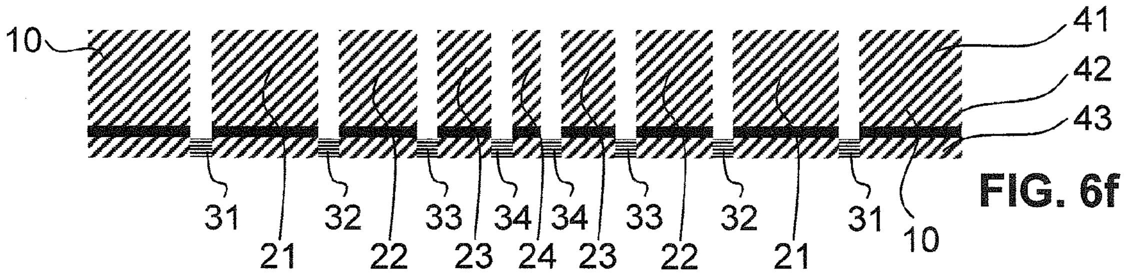


FIG. 6f

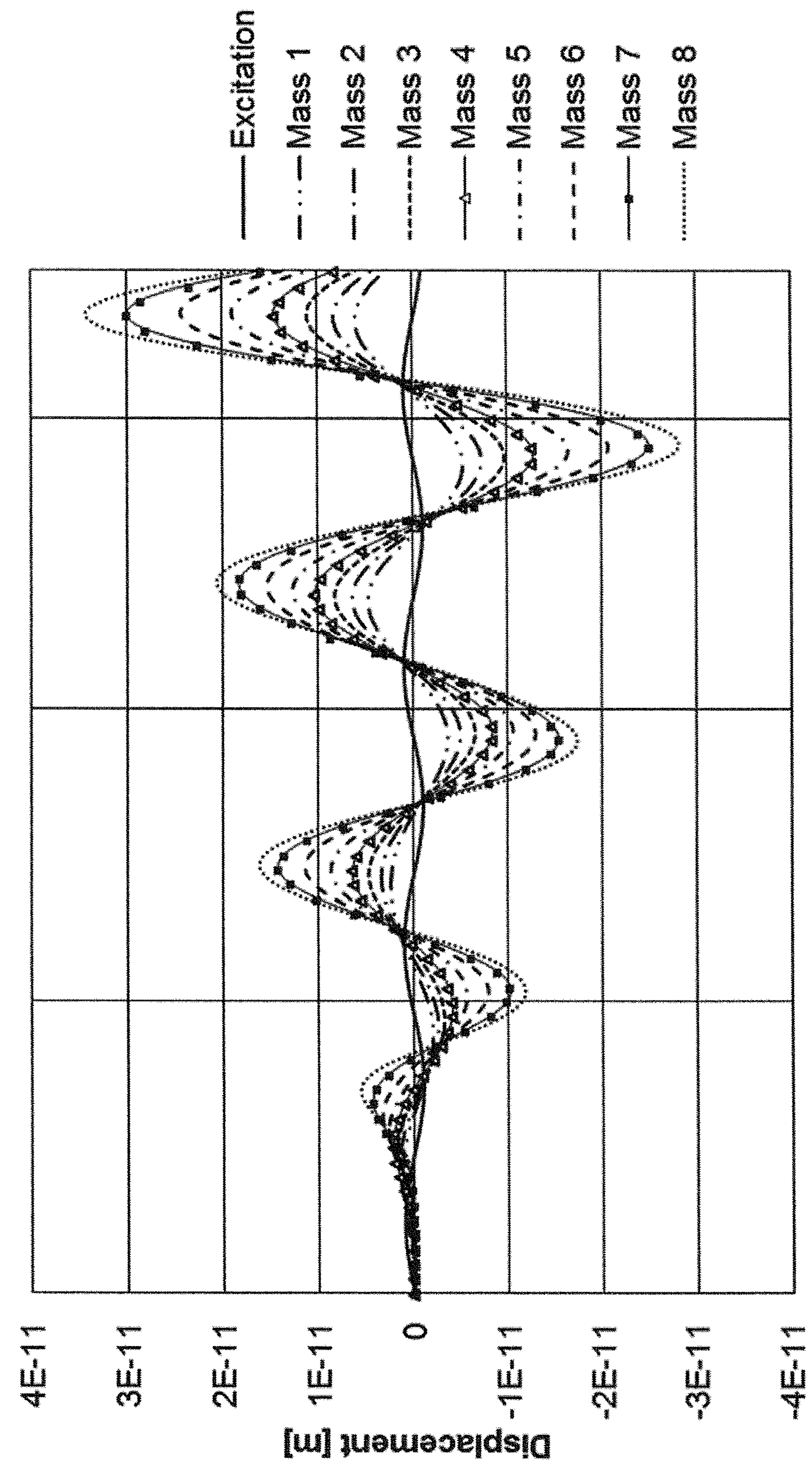
Displacement [m]
4E-11
3E-11
2E-11
1E-11
0
-1E-11
-2E-11
-3E-11
-4E-11
Time [s]
0
0.0002
0.0004
0.0006
Excitation
Mass 1
Mass 2
Mass 3
Mass 4
Mass 5
Mass 6
Mass 7
Mass 8

FIG. 7

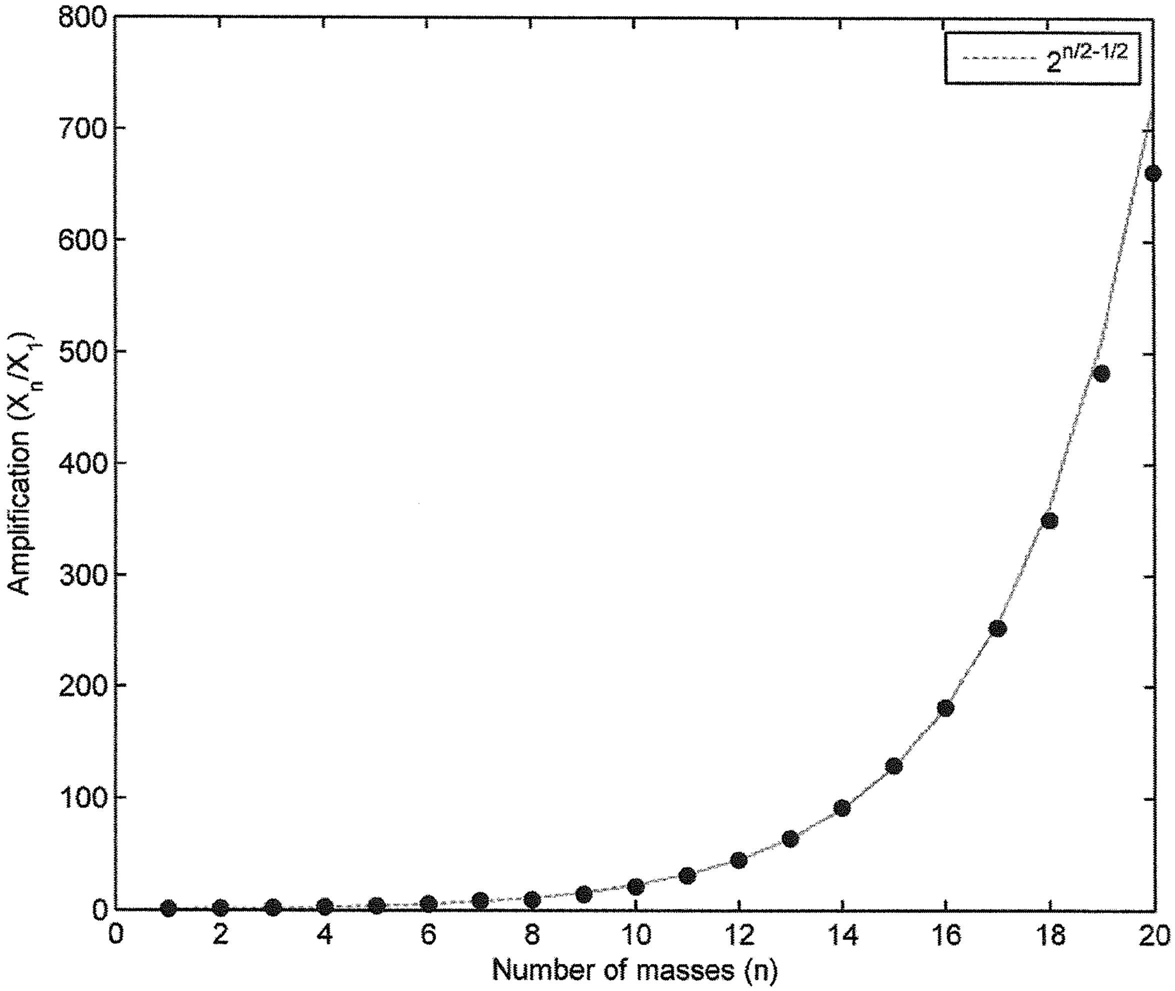

800
700
600
500
400
300
200
100
0
Amplification ($X_n/X_1$)
0
2
4
6
8
10
12
14
16
18
20
Number of masses (n)
$2^{n/2-1/2}$


FIG. 8

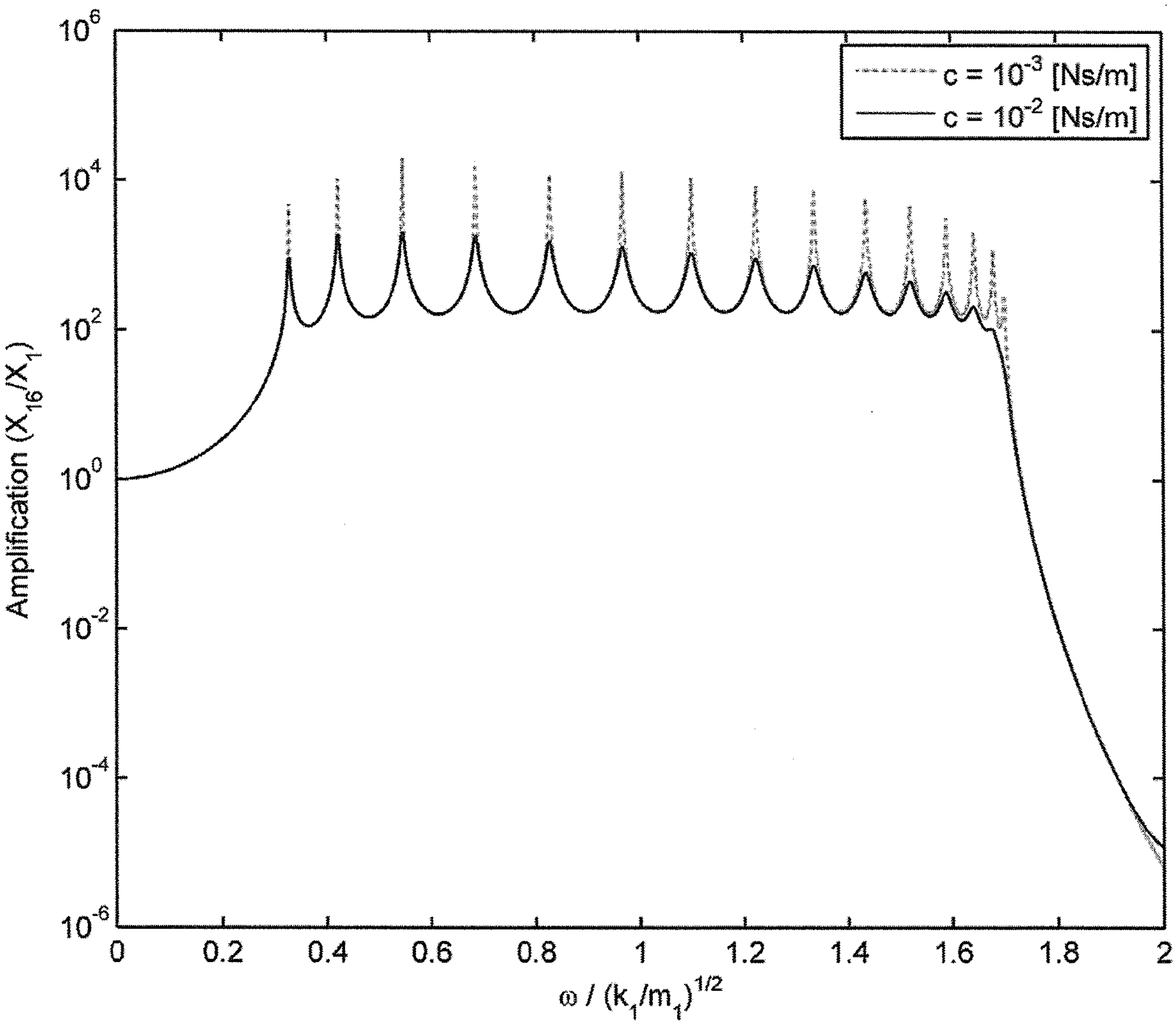

$10^6$
$10^4$
$10^2$
$10^0$
$10^{-2}$
$10^{-4}$
$10^{-6}$
Amplification ($X_{16}/X_1$)
0
0.2
0.4
0.6
0.8
1
1.2
1.4
1.6
1.8
2
$\omega / (k_1/m_1)^{1/2}$
c = $10^{-3}$ [Ns/m]
c = $10^{-2}$ [Ns/m]


FIG. 9

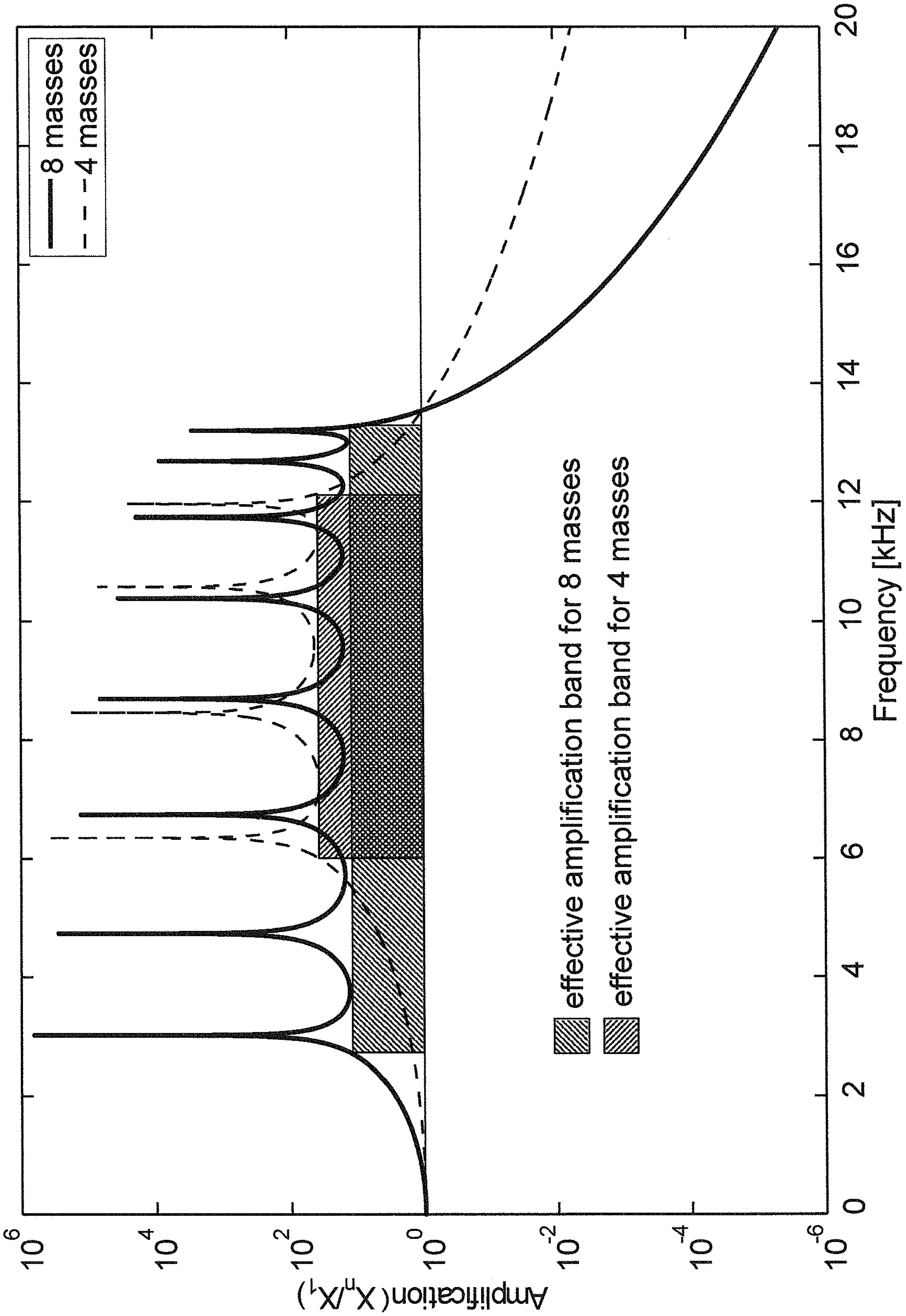

8 masses
4 masses
effective amplification band for 8 masses
effective amplification band for 4 masses
Frequency [kHz]
0
2
4
6
8
10
12
14
16
18
20
Amplification ( $X_n/X_1$)
$10^6$
$10^4$
$10^2$
$10^0$
$10^{-2}$
$10^{-4}$
$10^{-6}$


FIG. 10

Europäisches Patentamt
European Patent Office
Office européen des brevets

# EUROPEAN SEARCH REPORT

Application Number
EP 14 19 6369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2008/039378 A2 (CORNELL RES FOUNDATION INC [US]; DESAI SHAHYAAN [US]) 3 April 2008 (2008-04-03) * page 2, paragraph 7 - page 4, paragraph 15; figures 1, 2 * ----- | 1-16 | INV. G01P15/00 G01V1/18 |
| Y | US 2004/228216 A1 (BUTLER ALEXANDER L [US] ET AL) 18 November 2004 (2004-11-18) * page 2, paragraph 34 - paragraph 47; figures 9, 10 * ----- | 1-16 | |
| A | GB 2 463 257 A (POGGIAGLIOLMI ELIO [GB]) 10 March 2010 (2010-03-10) * page 5, line 14 - page 17, line 19; figures 1-4 * ----- | 1-16 | |

TECHNICAL FIELDS SEARCHED (IPC)

G01P
G01V
G01H

The present search report has been drawn up for all claims

1

| Place of search | Date of completion of the search | Examiner |
|---|---|---|
| Munich | 28 April 2015 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 19 6369

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2015

| Patent document cited in search report | Publication date | Patent family member(s) | Publication date |
|---|---|---|---|
| WO 2008039378 A2 | 03-04-2008 | EP 2074397 A2 | 01-07-2009 |
| | | KR 20090074204 A | 06-07-2009 |
| | | US 2010295414 A1 | 25-11-2010 |
| | | WO 2008039378 A2 | 03-04-2008 |
| US 2004228216 A1 | 18-11-2004 | NONE | |
| GB 2463257 A | 10-03-2010 | EP 2331919 A2 | 15-06-2011 |
| | | GB 2463257 A | 10-03-2010 |
| | | US 2011164469 A1 | 07-07-2011 |
| | | US 2015078131 A1 | 19-03-2015 |
| | | WO 2010026386 A2 | 11-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008039378 A
- US 7559238 B